# EUROPEAN PATENT APPLICATION

(11) **EP 2 091 139 A1**
(43) Date of publication of application: **19.08.2009**
(21) Application number: 07858272.3
(22) Date of filing: 30.11.2007
(51) Int. Cl.: H02K 53/00

(54) **ROTOR FOR MAGNETIC MOTOR**

(30) Priority: 04.12.2006 ES 200603103
(71) Applicant: Freixas Vila, Ramon, 43424 Sarral, Tarragona (ES)
(72) Inventor: Freixas Vila, Ramon, 43424 Sarral, Tarragona (ES)
(86) International application number: PCT/ES2007/000696
(87) International publication number: WO 2008/068362

(57) **Abstract**

Rotor for magnetic motor.

Rotor formed by groups of materials (4) that orientate the magnetic field and magnets (2) in spiral lines, with the two magnetic poles of each magnet (2) facing the stator (3). Close to a magnetic pole of the end of the group, the material (4) that orientates the magnetic field protrudes towards the stator (3).

This configuration enables to vary the field of each magnetic pole of the rotor which is projected to the stator; in this way, one end of the group of magnets (2) concentrates a very close magnetic pole in order to interact with the stator (3) and the opposite magnetic pole moves away gradually in order to decrease the interaction with the stator (3).

The application is for magnetic motors.

## Description

### TECHNICAL FIELD

This present invention concerns the technical area of magnetic motors.

### STATE OF THE TECHNIQUE

There are magnetic motors whose rotor consists of permanent magnets and materials that orientate the magnetic field of the magnets. The rotors alternate the two magnetic poles to interact with the stator coils. For example, patents JP2003274590, JP1227648 and JP2000060039 show rotors consisting of groups of magnets whose groups of magnetic poles in the external circumference show the same distance from the stator, and the material that orientates the magnetic field does not protrude towards the stator.

A rotor with magnets shows difficulty of interaction with a stator formed by permanent magnets, since repulsion takes place at one end of the magnet, while there is attraction at the other end. The problem is that the rotor cannot escape from the attraction of a magnetic pole; for example, figure 7 of patent JP56110483 shows the attraction between the rotor magnetic pole and the stator magnetic pole, thus, the rotor cannot escape from the magnetic attraction of the stator.

### DESCRIPTION / EXPLANATION

The rotor of the present invention interact with a stator which has permanent magnets, because it solves the above mentioned problem with a configuration which, by means of distance, enables to vary the field of each magnetic pole of the rotor which is projected to the stator.

The rotor is formed by a number of radially spaced groups; the groups are formed by permanent magnets and a material that orientates the magnetic field. The stator is located near the rotor external circumference, and the position of the stator axis is orthogonal to the rotor radius and parallel to the rotor rotation plane.

The rotor magnets have a face with the two magnetic poles facing the stator.

When a group consists of only one magnet, the magnet has the magnetic face which is closest to the stator, the face which shows the two magnetic poles, in a position parallel or oblique to the rotor rotation plane.

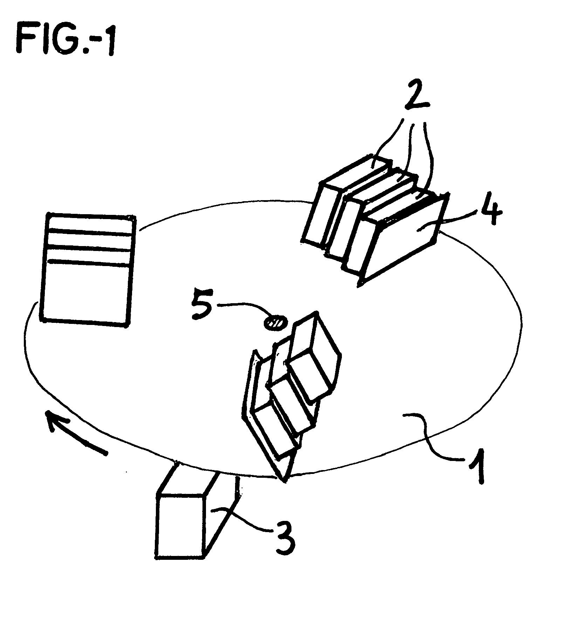

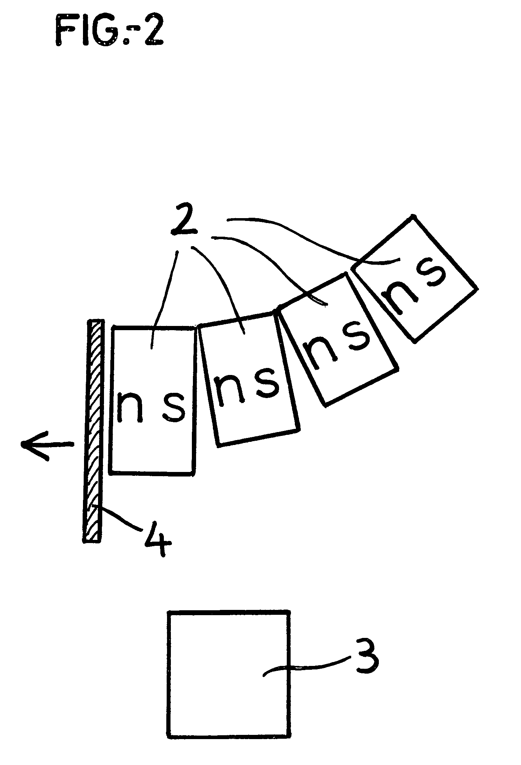

When a group consists of more than one magnet, they are placed one after the other on a line, with the magnetic poles of the flat faces with the largest surface area in attraction, the attraction is on the face which has only one magnetic pole, with the longitudinal axis of the group orthogonal to the rotor radius. The magnetic poles of the ends of each group are placed at different distance from the stator; for example, the longitudinal axis of the group can be oblique to the rotation plane (fig. 1). Magnets can also be arranged in a spiral line (fig.2), circular or in a staggered form.

The material that orientates the magnetic field is at the end of the group which in the rotation firstly interacts with the stator. The material that orientates the magnetic field, which can be high magnetic permeability material, is placed at the end of the group of magnets closest to the stator, on the side of an only magnetic pole of the magnet; the high magnetic permeability material is flat and protrudes in relation to the surface of the magnet face towards the stator so that the flux of the rotor magnetic pole interacts with the stator in the area that protrudes from the high magnetic permeability material.

The advantage in relation to previous patents is that the end of the group of the rotor which has the high magnetic permeability material concentrates the flux of the magnetic pole for the interaction with the stator, and there is a diminution of the magnetic field because in each magnet the two magnetic poles facing the stator move away.

### DESCRIPTION OF THE FIGURES

Figure 1 - The rotor (1) is formed by groups of magnets (2) in a row, the longitudinal axis of each group being oblique.
Figure 2 - The magnets (2) of the rotor (1) in spiral arrangement increase their distance towards the stator (3) progressively. The material (4) that orientates the magnetic field is located at the end closest to the stator (3).

### REALIZATION MODE

The rotor (1) of the motor consists of magnets (2) and a material (4) that orientates the magnetic field. Both elements form groups which are arranged around a shaft (5), in the radius of the external circumference of the rotor body (1), separated by a distance. The immobile stator(3) consisting of magnets is located close to the external circumference of the rotor body (1), the stator axis being arranged orthogonal to the rotor radius and parallel to the rotor (1) rotation plane.

Each group of the rotor (1) consists of rectangular bipolar magnets (2), different in size but similar in width, arranged one after the other in a spiral line, with the magnetic poles of the flat faces with the largest surface area in attraction, the attraction is on the face which has only one magnetic pole; in this way a group of magnets (2) is created which has two ends at different distance from the stator (3). The magnets (2) are arranged in such a way that the face with the largest surface area decreases progressively, the magnet (2) which has the face with the largest surface area in the group being placed at the end of the group closest to the stator; this magnet (2) at the end of the group has its face with the two magnetic poles closest to the stator parallel to the rotation plane of the rotor (1).

The material (4) that orientates the magnetic field is located at the end of the group closest to the stator (3), parallel to the face with the largest surface area of the end which has only one magnetic pole, separated from the magnet (2) face by a distance. The material (4) that orientates the magnetic field is flat and thin, with a surface that covers all the face of the magnet at the end of the group, and protrudes in relation to the face of the magnet towards the stator. The material that orientates the magnetic field can be a high magnetic permeability material, pure iron, for example, which provides a way for the magnetic field to pass through. The material that orientates the magnetic field can be a high electrical conductivity material, copper, for example, which, when turning with the rotor in relation to the stator which has magnets, creates induced currents that can block the passing of the magnetic field. High magnetic permeability materials and high electrical conductivity materials can be combined in order to orientate and block the passing of the magnetic field at the end of the group of magnets in a better way.

For rotation to take place in an only direction, the first area of the group of magnets that interacts with the stator is the end of the group which has the material that orientates the magnetic field.

### INDUSTRIAL APPLICATION

The application of the present invention is for magnetic motors whose stator is formed by permanent magnets.

## Claims

1. Rotor for magnetic motor , formed by magnets (2) and material (4) that orientates the magnetic field, both elements forming groups arranged around a shaft(5), in the radius of the external circumference of the rotor (1) body, separated by a distance; the immobile stator (3) is close to the external circumference of the rotor (1) body, with the axis of the stator being orthogonal to the rotor (1) radius and parallel to the rotation plane of the rotor; the rotor magnets (2) have an only magnet pole on the flat faces with the largest surface area; **characterized** because each group of the rotor (1) is formed of at least one magnet (2), which has one face with the two magnetic poles facing the stator (3), and a group of the rotor with several magnets (2) has its magnets arranged one after the other with the magnetic poles of the flat faces with the largest surface area in attraction, on a circular, spiral, staggered or oblique line; the material (4) that orientates the magnetic field is placed on the side of the face of the magnet (2) at the end of the group closest to the stator (3).

2. Rotor for magnetic motor , according to claim 1, **characterized** because one magnet (2) has its face with the two magnetic poles closest to the stator (3) parallel or oblique to the rotation plane of the rotor.

3. Rotor for magnetic motor , according to claim 1, **characterized** because the material (4) that orientates the magnetic field has a surface which covers the face of the magnet (2) at the end of the group and protrudes in relation to the face of the magnet (2) towards the stator(3).

4. Rotor for magnetic motor , according to claims 1 and 3, **characterized** because the surface of the material (4) that orientates the magnetic field which protrudes towards the stator is placed on the side of an only magnetic pole.

5. Rotor for magnetic motor , according to claims 1 and 3,4, **characterized** because the material (4) that orientates the magnetic field is a high magnetic permeability material or a high electrical conductivity material.

## Amended claims

### Amended claims under Art. 19.1 PCT

**1.** Rotor for magnetic motor , formed by magnets (2) and material (4) that orientates the magnetic field, both elements forming groups arranged around a shaft (5), in the radius of the external circumference of the rotor (1) body, separated by a distance; the immobile stator (3) is close to the external circumference of the rotor (1) body, with the axis of the stator being orthogonal to the rotor radius and parallel to the rotation plane of the rotor; the rotor magnets (2) have an only magnetic pole on the flat faces with the largest surface area; **characterized** because each group of the rotor (1) is formed of at least one magnet (2), which has one face with the two magnetic poles facing the stator (3), and a group of the rotor with several magnets (2) has its magnets arranged one after the other with the magnetic poles of the flat faces with the largest surface area in attraction, on a circular, spiral, staggered or oblique line; the material (4) that orientates the magnetic field is placed on the side of the face of the magnet (2) at the end of the group closest to the stator (3), and the material (4) is placed on the side of an only magnetic pole.

**2.** Rotor for magnetic motor , according to claim 1 , **characterized** because the material (4) that orientates the magnetic field is a high magnetic permeability material or a high electrical conductivity material.
